# EUROPEAN PATENT APPLICATION

(11) **EP 4 707 622 A1**
(43) Date of publication of application: **11.03.2026**
(21) Application number: 25200015.3
(22) Date of filing: 03.09.2025
(51) Int. Cl.: F16B 25/00, F16B 25/10

(54) **FASTENER**

(30) Priority: 10.09.2024 AU 2024902860; 02.09.2025 AU 2025226662
(71) Applicant: Illinois Tool Works Inc., Glenview IL 60025 (US)
(72) Inventor: BANDARA, Ayesh, Glenview, 60025 (US)
(74) Representative: HGF

(57) **Abstract**

A fastener comprising a head and a shank that terminates in a self-drilling tip, the shank including a distal portion that is spaced away from the head and includes the tip, wherein the distal portion is provided with a pair of offset grooves that define respective cutting faces of the fastener.

## Description

### TECHNICAL FIELD

The invention relates to fasteners, in particular self-drilling screws. The fasteners are particularly, although not exclusively, suitable for woodworking and home-based construction applications typically undertaken by relatively inexperienced users.

### BACKGROUND

Self-drilling screws are a go-to fastener of choice in the do-it-yourself ("DIY") industry. Such screws are commonly used for woodworking and many timber-based home construction applications including as roofing and decking.

As the name implies, self-drilling screws do not require a pilot hole in order to perform as a fastener. Rather, self-drilling screws include a threaded shank that terminates in a drill-like or pointed tip, the tip being designed to drive through relatively soft substrate materials includingwood, particle board, plasterboard and soft metals thus eliminating the need for a pre-drilled pilot hole.

Self-drilling screws are not without their drawbacks and challenges.

For example, DIY users typically have limited access to professional grade power tools, where, unlike professional tradesman who may have a complete range of bespoke power tools for different applications at their disposal, the DIY user's generally sparse toolbox means that less than ideal drive tools may be utilised and result in a general lack of precision. In addition, while self-drilling screws do not require pilot holes, increased torque demands to drive the fastener into the substrate pose challenges for lower powered tools typically favoured by DIY users, often necessitating several battery changes to complete a project. Further, when used in roofing applications, self-drilling screws require a sufficient hold-down or pull-out strength to meet wind load requirements. This typically dictates a comparatively dense thread pitch that results in an increased drive time for each fastener. Also, when used in the building of timber structures such as decks, the use of self-drilling screws may increase the risk of splitting of plank ends when being fastened to a joist. Such splitting typically necessitates total replacement of the plank, which is time consuming and wasteful.

The present invention was conceived with these short-comings in mind and seeks to at least in part alleviate the above-identified problems or to offer the public with a useful alternative.

### SUMMARY

In a first aspect, the invention provides a fastener comprising a head and a shank that terminates in a self-drilling tip, the shank including a distal portion that is spaced away from the head and includes the tip, wherein the distal portion is provided with a pair of parallel grooves that define respective cutting faces of the fastener.

Each groove may be defined by a pair of radially offset faces, when viewed along a longitudinal axis of the fastener. The respective faces of each groove may be radially offset from one another by up to about 90°. Each groove may include at least one substantially planar face. Each groove may include at least one ramped face. Each groove may have a scalloped profile when viewed axially along a length of the fastener. The pair of grooves may be neighbouring grooves in the sense that, together, both grooves are confined within a sector of about 180° or less in a direction of rotation of the fastener. The grooves may extend from or proximate to the tip.

In some embodiments, the grooves may be interspaced by an axially extending spur. The spur may include a pair of substantially parallel side faces. Each groove may be partly defined by a respective side face of the spur.

The tip may be a drilling tip. In particular, the tip may be a pointed tip.

In some embodiments, the shank may further include an engagement portion. The engagement portion may be a threaded engagement portion. In particular, the engagement portion may include a thread that, when viewed axially along a length of the fastener, has a saw-tooth profile.

The shank further may further include a debris clearing portion. The debris clearing portion may include a plurality of helical burrs that define flutes for channeling debris. The burrs may wrap at least partly around the shank in a circumferential direction.

In some embodiments, the head of the fastener may be a bugle shaped head. The head may include a hexagonal shaped or a cross-shaped drive portion. The head may include a plurality of projections extending from an underside thereof towards the shank. The projections may be axial or rib-like projections. Each projection may include a substantially planar cutting face.

The fastener may include an anti-corrosion coating. The coating may be a durable coating. Preferably, the coating is a zinc-nickel coating or a chromium coating.

### BRIEF DESCRIPTION OF THE DRAWINGS

The invention will now be described, by way of non-limiting example only, with reference to the accompanying drawings, in which:
Figure 1 is a perspective view of a fastener according to an embodiment of the invention, the fastener including a head and a shank having a self-drilling tip;
Figures 2 and 3 are enlarged side and bottom views of the fastener of Figure 1, showing a distal portion of the shank;
Figure 3 is a sectional view of the fastener of Figure 1, showing a debris clearing portion of the shank;
Figure 4 is a sectional view of the fastener of Figure 1, showing an engagement portion of the shank;
Figure 5 is a sectional view of the fastener of Figure 1, showing a debris clearing portion of the shank;
Figures 6 and 7 are top and side sectional views of the fastener of Figure 1, showing a hex-shaped drive portion of the head;
Figures 8 and 9 are side and bottom views respectively of the fastener of Figure 1, showing rib structures of the head;
Figure 10 is a side view of a fastener according to another embodiment of the invention, the fastener including a head and a shank having a self-drilling tip;
Figures 11 and 12 are enlarged side views of the fastener of Figure 10, showing distal portion and engagement portions of the shank, respectively; and
Figures 13 and 14 are top and side sectional views of the fastener of Figure 10, showing a cross-slot shaped drive portion of the head.

### DETAILED DESCRIPTION

In the following detailed description, reference is made to accompanying drawings which form a part of the detailed description. It will be readily understood that the aspects of the present disclosure, as generally described herein and illustrated in the drawings may be arranged, substituted, combined, separated and designed in a wide variety of different configurations, all of which are contemplated in this disclosure.

Unless defined otherwise, all technical and scientific terms used herein have the same meaning as commonly understood by one of ordinary skill in the art to which this invention belongs. Although any methods and materials similar or equivalent to those described herein can also be used in the practice or testing of the present, a limited number of the example methods and materials are described herein.

In general terms, the fastener 10 shown in the Figures comprises a head 12 and an elongate shank 14 that extends therefrom. The shank 14 includes a distal portion 16 that terminates in a self-drilling tip 18. A pair of parallel grooves 20, 22 extend at least partway along the distal portion and define respective cutting faces of the fastener 10. Together, the grooves 20, 22 work to reduce resistance encountered when the fastener 10 is driven into a substrate while also promoting channeling of debris away from the tip 18, thereby providing the fastener 10 with improved levels of performance, efficiency and reliability when used across various substrate materials and applications.

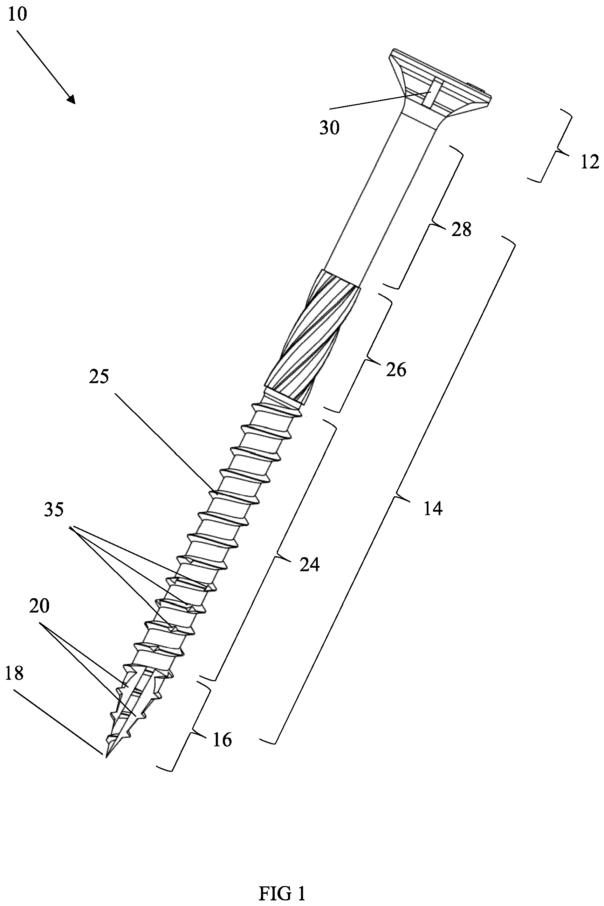

A preferred embodiment of fastener 10 will now be described in general with reference to Figure 1, with the various features thereof being described in additional detail later.

As shown, the fastener 10 is provided in the form of a batten screw having an elongate shank 14 that defines a longitudinal axis of the fastener 10, extending end-to-end from the head 12 to the tip 18.

The distal portion 16 of the shank 14 provides the lowermost or bottom section of the shank 16, extending upwardly from the tip 18 in a direction of the head 12. As shown, the distal portion 16 is provided with a tapered geometry, with a diameter thereof tapering along its length towards a point at tip 18.

The shank 14 also includes an engagement portion 24. The engagement portion 24 is adapted to engage with a substrate within which the faster 10 is installable, to thereby fix or otherwise secure the fastener 10 to the substrate. As shown, the engagement portion 24 includes a generally helical thread 25 that extends from the distal portion 16 and at least partway along the shank 14 towards the head 12. The thread 25 may be a single thread or may include more than one thread arranged in an interleaving manner. The pitch of the thread 25 may be selected to suit particular substrates. A gauge of the thread is chosen depending on application. For example, when used as a batten screw in construction applications, the gauge may be a generally coarse gauge, for example 14 gauge (14G)

A debris clearing portion 26 is provided between the head 12 and the engagement portion 24. The debris clearing portion 26 is adapted to channel debris generated as the fastener 10 is driven into the substrate upwardly and outwardly. As shown, the debris clearing portion 26 is provided in the form of a fluted portion that extends from the engagement portion 24 towards the head 12, stopping short thereof such that an intermediate, non-fluted portion 28 is provided therebetween. The plain surface of the intermediate portion 28 may assist in allowing the fastener 10 to be used to pull together two substrates without the need for external clamping.

The head 12 of the fastener 10 is provided at the top or proximal end of the shank 14. As shown, the head 12 has a bugle shape that is adapted to seat within the substrate, *in-situ*, in a countersunk manner. A plurality of projections 30 are arranged circumferentially about an underside of the head 12, extending towards the shank 14. The projections 30 provide structural support to the head 12 whilst also providing self-countersinking faces 32.

The various individual features of fastener 10 will now be described in more detail with respect to the corresponding Figures.

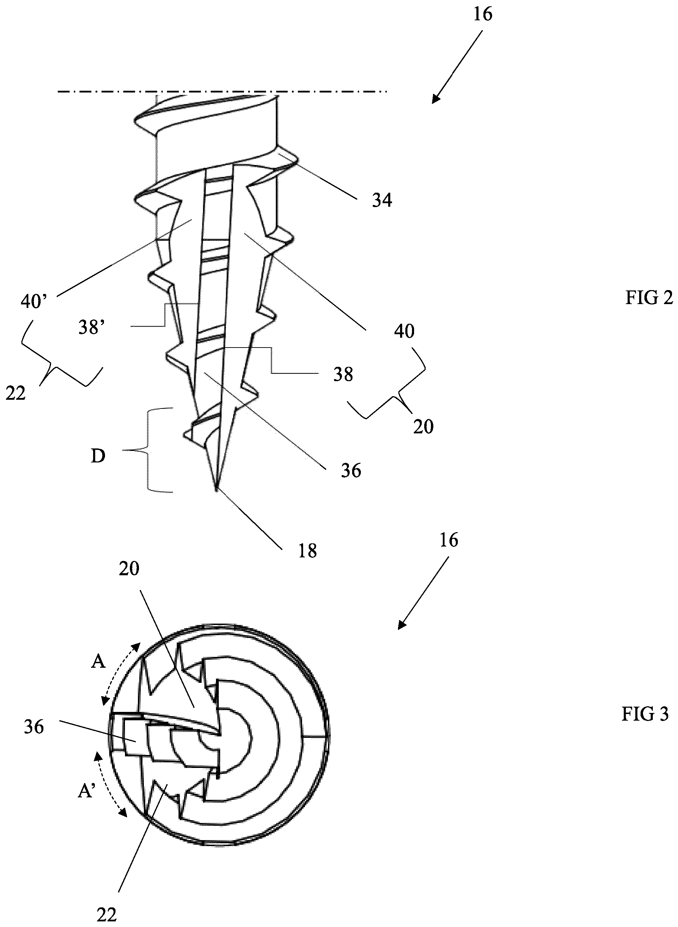

Beginning with the distal portion 16 as shown in Figures 2 and 3. As shown in the Figures, the tip 18 is a pointed or drilling tip. The tip may have a geometry that is generally similar to a standard "type 17" fastener tip. Although the illustrated embodiment shows that the distal portion has a diameter that tapers substantially linearly towards the tip 18, it is also contemplated that the tip may include a generally conical reduction. The drilling tip 18 is configured to allow the fastener 10 to pierce the substrate and be driven into the substrate directly and without the need for a pilot hole. Trials by the applicant have demonstrated that drilling tip 18 is suitable for use with both light gauge metal and wood substrates, where the needle like geometry may assist in cleanly bursting through and deforming the metal or puncturing wood substrate so as to lead to increase a surface area for engagement with the engagement portion 24. It is understood that, depending on the desired application, the fastener 10 may be provided with several alternative tip geometries. For example, rather than the pointed or drilling tip shown in the Figures, the fastener 10 may be provided with a spade-like tip or a drill-bit like fluted tip or application specific geometry.

A thread 34 commences at or at least proximate to the tip 18. The thread 34 extends along the distal portion 16 and towards the engagement portion 24. The thread 34 has a saw-tooth profile when viewed in side section. As shown, the thread 34 has a substantially common pitch thread along its complete length. Trials by the applicant have shown that a reduced thread at or towards the start of the thread 34 may provide improved starting performance. In the embodiment shown in the Figures, the threads 25 and 34 form a single, continuous thread. In other embodiments, the thread 34 may be of variable pitch, and have a reduced pitch along the distal portion 16 when compared to the pitch of the thread 25 along the engagement portion 24.

The grooves 20, 22 are provided in the form of parallel generally V-shaped slots that cut through the thread 34. In the embodiment shown, each groove 20, 22 has a lower end that begins at or near the tip 18, such that debris displaced by the tip 18 as the fastener 10 is driven into the substrate is channelled into the grooves 22. In particular, groove 20 begins at the tip 20 while groove 22 is staggered away from the tip by a distance D. Preferably, the distance D is between 1 and 2 times the pitch of the thread 34. Each of the grooves 20, 22 has an upper end that terminates along the shank 14 away from the tip 18. It is understood that while the grooves 20, 22 of the illustrated embodiment extends completely along the entire length of the distal portion 16 - that is about 3-4 times the pitch of the thread 34 - in other embodiments the grooves 20, 22 may extend only partway. Preferably, the upper ends of the grooves 20, 22 are axially parallel to one another a - i.e. each groove 20, 22 terminates at the same distance along the shank 14. As shown, the grooves 20, 22 are provided as twin or neighbouring grooves, in the sense that both grooves 20, 22 extend longitudinally parallel to one another and are confined within an angular sector of 180° or less in a direction of rotation of the fastener 10.

In particular, as shown, the grooves 20, 22 are provided in the form of a pair of substantially linear slots that are interspaced by an axially extending spur 36. In this manner, it is understood that the grooves 20, 22 may be formed by cutting the respective slots into the distal portion 16 of the fastener 10. The slots may, for example, extend along the distal portion 16 at an angle of between 1° and 5°, and preferably about 3°, with respect to the longitudinal axis of the shank 14 in the same (i.e. right hand) direction of the thread 34. It is thought that this positive alignment of the slots 20, 22 with the thread 34 reduces required drive torque and promotes channeling of debris into the slots.

Best shown in Figure 3, the spur 36 is provided by an uncut thin-wall section of the distal portion 16, disposed between the grooves 20, 22. Opposing side walls 38, 38' of the spur 36 define respective inner faces of the grooves 20, 22, while ramped surfaces 40, 40' define respective outer faces thereof. As shown, each groove 20, 22 subtends an angle A, A' of about 80°. It is understood, however, that the radial offset between the respective side walls 38 and ramped surfaces 40 of each groove 20, 22 may be smaller or larger - for example about 30°, 40°, 50°, 60°, 70°, 90° - with the angle being selected to best suit the substrate within which the fastener 10 is designed for use. The ramped surfaces 40 provide the respective grooves 20, 22 with a generally scalloped profile when the fastener 10 is viewed in side section, with this profile promoting upwards evacuation of debris along the grooves 20, 22 and away from the tip 18.

As the fastener 10 is driven in a clockwise direction, the leading face of each groove 20, 22 (i.e. ramp surface 40 and side wall 38') serve as a cutting face. The leading edge of these cutting faces are lined with teeth 42 formed from the cut sections of the thread 34. The teeth 42 provide a cutting edge of the respective grooves 20, 22 that improves the cutting performance of the fastener 10, reducing the drive torque required. This is because the generally smooth surface of the cutting face combined with the serrated or saw-tooth profile of the teeth 42 impart a substantially cutting action onto the substrate as the fastener is rotatably and axially driven forward into the substrate, with each rotation of the fastener resulting in engagement of the substrate by the consecutive teeth 42.

It is understood that reducing the required drive torque is advantageous, because, for example, less power is drawn from a battery of a power tool for each fastener 10 installation. In this way, a greater number of fasteners 10 can be installed for a given battery charge, reducing the number of battery changes or re-charges that may be required to complete a job. This may be particularly beneficial for DIY users who are often reliant on power tools of limited battery capacity. Also, a reduction in required driving torque can reduce effort and fatigue if installed by a hand-driven tool such as a screwdriver. In this manner, each groove 20 also provides a passage or channel along which the debris may be evacuated or otherwise displaced, thereby reducing a likelihood of the substrate 18 swelling.

Trials by the applicant have demonstrated several performance advantages that may be associated with the configuration of the distal portion 16 as described herein, including:
- Reduced Driving Resistance: The twin cut tip design reduces the resistance encountered when driving the fastener into wood. This helps the fastener to penetrate more easily, especially in harder woods or materials that are prone to splitting.
- Minimized Splitting: The twin cut tip helps to minimize the risk of splitting the wood. This is particularly useful when working with hardwoods or when fastening close to the edges of a piece of wood.
- Improved Precision: The design of the tip provides better initial pick up and alignment. This improves the accuracy of fastener placement and reduces the likelihood of the fastener slipping off the intended path.
- Enhanced Driving Speed: The ease of penetration and reduced friction means that the fastener can be driven in more quickly, increasing efficiency and reducing the effort required.
- Better Grip and Hold: The tip's design allows the fastener to establish a strong grip in the material, contributing to a more secure hold.
- Less Cam-Out: The improved bite and engagement reduce the chances of cam-out (where the driver bit slips out of the fastener head), which can be common with less effective fastener tips.

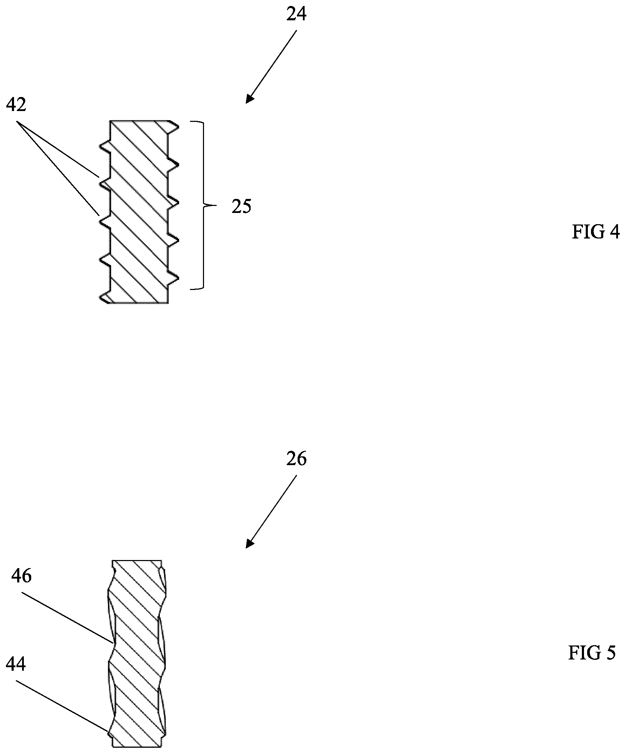

Moving now to Figure 4, which shows the engagement portion 24. In the embodiment shown, the engagement portion 24 extends from the distal portion 16 approximately half way up the shank 14. It is understood, however, that the engagement portion 24 may extend further up the shank 14 towards the head 12, depending on the total length of fastener 10 and the desired application. The engagement portion 24 includes a threaded section. As shown, the threaded section is defined by thread 34, which extends continuously from the tip 18 and along the distal portion 16 into the engagement portion 24. The thread 34 provides engagement surfaces that engage with the substrate and contribute to the holding strength of the fastener 10. As previously described, the thread 34 is provided with a saw-tooth or generally serrated profile. Optionally, a plurality of notches 35 may be provided within the engagement portion 24. The notches are best shown in Figure 1. The notches 35 provide additional cutting edges to the engagement portion 24, improving the cutting performance of the fastener 110, particularly when used with soft wood substrates. As shown, the notches 35 extend only partway along the engagement portion 24. In particular, the notches 35 are provided in a lower part of the engagement portion 24. For example, the notches 35 may be provided along a first quarter of the engagement portion 24. This is because trials by the applicant have demonstrated that it is this lower part of the engagement portion 24 that provides the cutting action into the substrate, with the upper part of the engagement portion 24 following into the hole created by the lower part. As shown, the notches 35 are arranged along an axis that is tilted or otherwise offset with respect to the longitudinal axis of the fastener 10. In particular, the notches 35 are arranged in a direction of the thread 34, because trials by the applicant having demonstrated such an arrangement to provide increased cutting power.

The debris clearing portion 26 will now be described with reference to Figure 5. The debris clearing portion 26 is provided between the head 12 and the engagement portion 24. The debris clearing portion 24 comprises at least one burr 44 that projects outwardly from and extends along the shank 14. As shown, a plurality of burrs 44 extend helically to form a thread that wraps at least partly around the shank 14, forming flute like channels 46 therebetween. The channels 46 provide a passage through which debris may be evacuated, reducing a risk of swelling of the substrate. It is understood, however, that the debris clearing portion 24 may comprise any number of burrs 44. The number of burrs 44 may be prescribed based on the application of fastener 10 - i.e. based on intended substrate and similar factors. The debris clearing portion 24 has a diameter that is less than that of the engagement portion 24 and only slightly larger than that of the intermediate portion 28 of the shank 14. This is beneficial, for, in use, the engagement portion 24 is the leading portion of the fastener that is inserted into the substrate, with the debris clearing portion 26 then following into the hole that is formed within the substrate by the engagement portion 24. Further, because the debris clearing portion 24 has a diameter slightly larger than the intermediate portion 28, it is the head 12 (and not the intermediate portion 28) that applies the pull-in/clamp down force onto the substrate as the fastener 10 is embedded therein, ensuring that the pull-in force is perpendicular to the substrate and thereby reducing substrate creak.

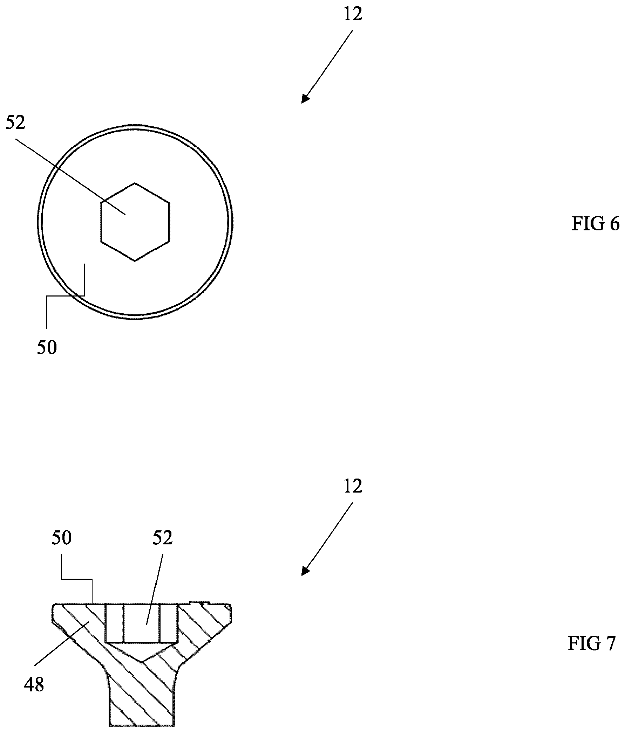

The head 12 of the fastener 10 will now be described with reference to Figures 6 to 9.

Best shown in Figures 6 and 7, the head 12 includes a includes a head body 48 having a substantially flat disc shaped upper surface 50 that is arranged to sit substantially flush with the surface of the substrate within which the fastener is inserted. A drive portion 52 is provided within the upper surface 50. The drive portion 36 is configured to receive a driving bit of a driving tool such as a power" tool. As shown, the drive portion 52 is preferably provided in the form of a hexagonal-shaped cavity that extends downwards from the upper surface 50. A corresponding hex-shaped driving bit that would be familiar to the home DIY user may be used, ensuring that the user does not need to source particular, less common, bits and the like in order to use fastener 10.

Trials by the applicant have demonstrated the hex-shaped drive portion 52 to provide several advantages, including:
- Higher torque compatible: The hex drive design allows for better torque transfer from the tool to the fastener. The six-sided shape provides more surface contact than other drive types, reducing the likelihood of slipping and enabling higher torque to be applied.
- Standardization and Familiarity: Hex drives are widely used and standardized, which means that tools and fasteners with this drive type are readily available and compatible with a range of applications.
- Improved precision: The internal hex shape provides a secure fit between the tool and the fastener, enhancing grip and control. This is particularly useful when working with high-torque applications where precision is critical.
- Reduced slippage. Hex drives are less prone to cam-out (the drive slipping out of the fastener) compared to some other drive types like a cross-slot (Phillips). This leads to more efficient driving and reduces the risk of damaging the fastener or surrounding material.

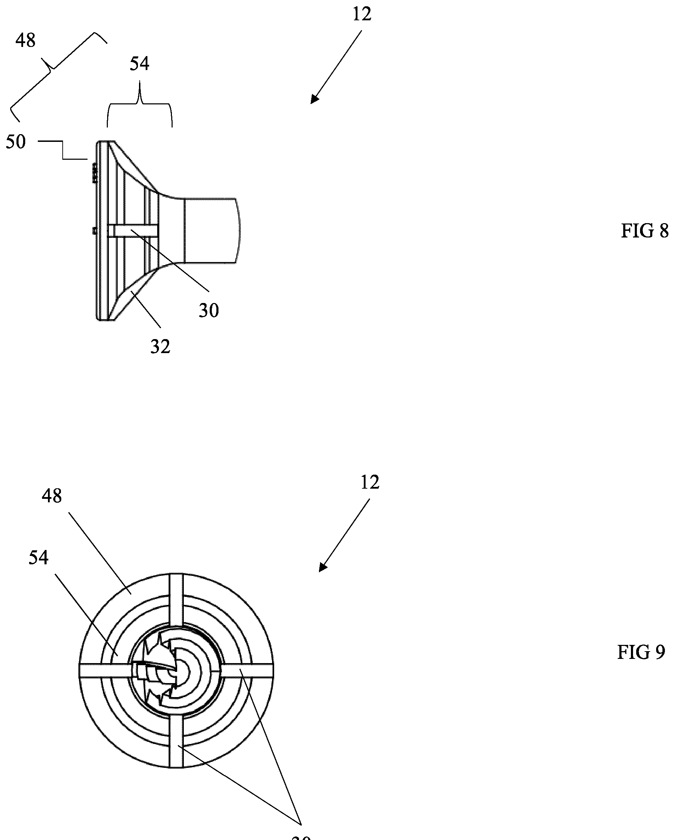

Moving now to Figures 8 and 9. A tapered region 54 is provided under the head body 30, projecting outwardly with a diameter that reduces towards the shank 14. The tapered region 54, may, for example as shown, have a countersunk profile that tapers substantially linearly from the enlarged diameter of the upper surface 50 of the head 12 towards the reduced diameter of the shank 14. Specifically, as shown, the tapered region 54 has a bugle-like shape that provides a smooth transition between the upper surface 50 and the shank 14. This shape can be advantageous when compared to more conventional straight or linear countersink profiles as the comparatively shallow ramp angle reduces the likelihood of splitting of the substrate.

The plurality of projections 30 are arranged circumferentially around the head 12. In particular, as shown, a plurality of rib-like projections 30 are equispaced around the head 12, extending axially and substantially linearly along the tapered region 54. The projections 30 serve to increase the structural integrity of the head 12 and/or to remove displaced material within the substrate. In regard to the latter, leading faces of the respective ribs 30 provide substantially planar self-countersinking faces 32 that allow the head 12 to effectively self-countersink within the substrate as the fastener 10 is driven, allowing the head to sit flush within the surface of the substrate and not protrude therefrom. The self-countersinking faces 32 work to remove or displace material of the substrate, which would otherwise be compressed as the head 12 is driven into the substrate. In the illustrated embodiment, four ribs 30 are equispaced around a circumference of the tapered region 54, however it is understood that there could be more or less ribs 30.

Whilst not shown in the Figures, it is contemplated that at least a portion of the shank 14 may be coated in an anti-corrosive coating. Preferably, the coating may be a zinc-nickel coating. Trials by the applicant have demonstrated such coating to provide several advantages over other coatings more conventionally used in the building and construction industry, including:
- Enhanced Corrosion Resistance: The zinc-nickel coating provides superior protection against corrosion compared to standard zinc coatings. This makes the fasteners suitable for use in harsh environments, including those exposed to moisture, chemicals, and salt.
- Improved Durability: The combination of zinc and nickel creates a coating that is more resistant to wear and abrasion. This enhances the longevity of the fasteners and ensures they maintain their performance over time.
- Increased Temperature Resistance: Zinc-nickel coatings can withstand higher temperatures compared to some other coatings. This makes them suitable for applications where fasteners may be exposed to elevated temperatures.
- Enhanced Aesthetic Quality: The coating has a bright, uniform appearance that can improve the visual appeal of the fasteners. It also has good adhesion, ensuring that the coating remains intact and doesn't flake off easily.
- Better Mechanical Properties: Zinc-nickel coatings can provide improved mechanical properties, including increased hardness and strength, which contribute to the overall performance and reliability of the fasteners.
- Reduced Risk of Hydrogen Embrittlement: Zinc-nickel coatings are less likely to cause hydrogen embrittlement compared to other coatings, reducing the risk of fastener failure under stress.
- Environmental Resistance: The coating offers good resistance to various environmental factors, including exposure to chemicals and pollutants.
- Cost-Effectiveness: While zinc-nickel coatings might be more expensive than standard zinc coatings, their enhanced performance and longevity can lead to cost savings in the long run by reducing the need for frequent replacements or maintenance.
- Compatibility with Other Finishes: Zinc-nickel coatings can be used in conjunction with other finishes or treatments, providing flexibility in design and application.

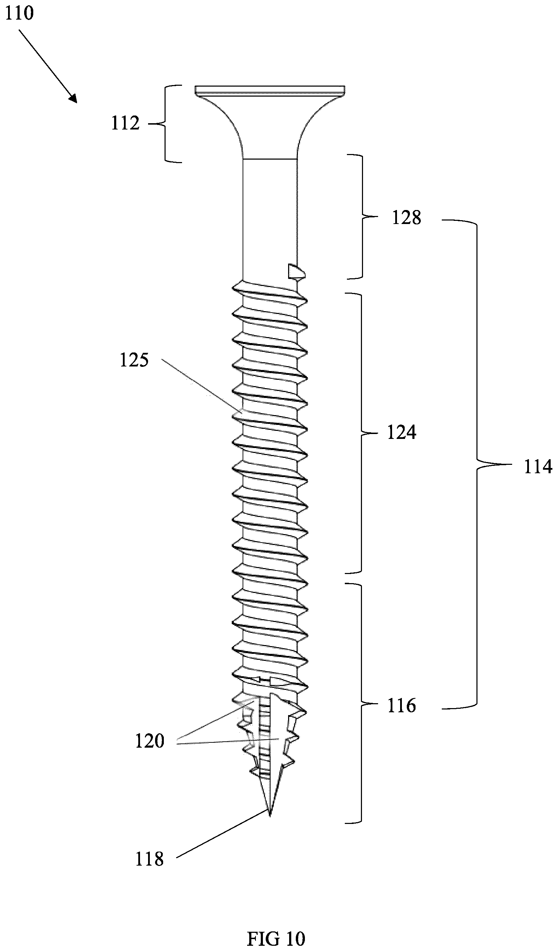

An alternative embodiment of the invention, in the form of fastener 110, will now be described with reference to Figures 10 to 14. For clarity, similar components and functional analogues will be described using similar terminology and numerical references.

Fastener 110 is generally similar to fastener 10 and may include any combination of features as described with respect thereto. Notably, however, fastener 110 has been designed to have particular application in fixing plasterboard (drywall) to timber substrates, for example during wall and ceiling construction. The fastener 110 may also be used to install various fixtures such as shelves, cabinets and the like onto plasterboard surfaces.

As shown in Figure 10, fastener 110 includes a bugle shaped head portion 112 and an elongate shank 114 that extends therefrom and terminates in a tip 118. The shank 114 includes an engagement portion 124 that extends up the shank 114 from or proximate to the tip 118. As shown, the engagement portion 124 terminates a distance away from the head 112, with an intermediate portion 128 extending between the head 112 and the engagement portion 124 and being substantially smooth and devoid of projections.

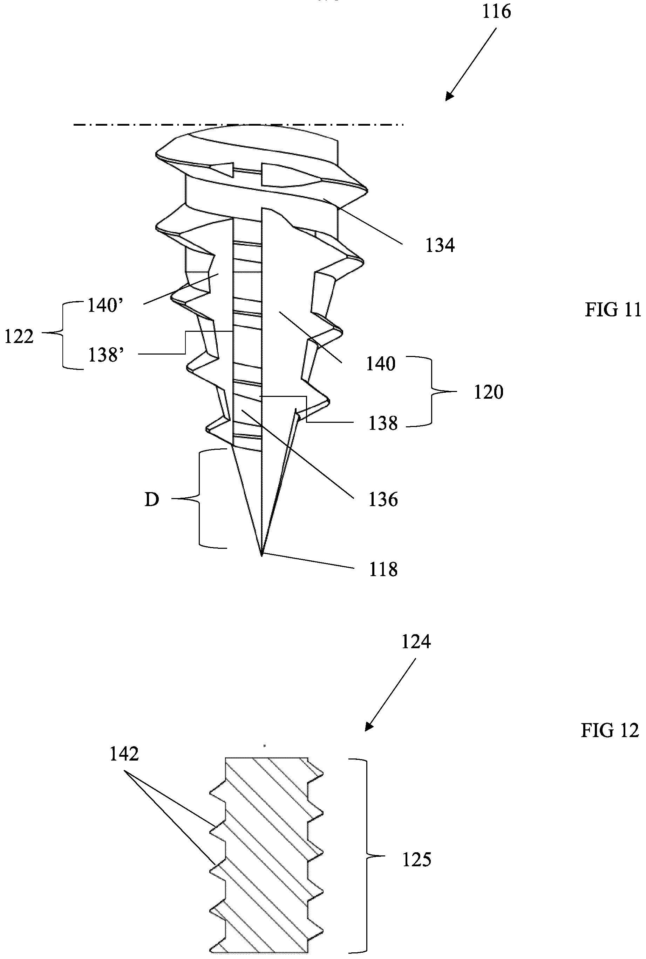

Best shown in Figure 11, a distal portion 116 of a shank 114 of the fastener 110 is generally similar to that of fastener 10, and includes a self-drilling tip 118. In particular, the tip 118 has a geometry that is generally similar to a "type 17" fastener tip. Trials by the applicant have demonstrated that such tip shape is efficient at piercing into a plasterboard sheet without ripping or otherwise damaging the skin or paper layer of the plasterboard sheet, as is known to occur with more conventional needle point plasterboard screws.

The distal portion 116 also includes a pair of axially parallel grooves 120, 122 that extend along the shank 114 away from the tip 118. The grooves 120, 122 are configured similarly to grooves 20 and 22 of fastener 10. More specifically, leading faces of the grooves 120, 122 serve as cutting faces, reducing the drive torque required as the fastener 10 is driven into the substrate. The grooves 120, 122 also serve as channels to promote evacuation of debris away from the cutting tip 118, reducing the risk of the substrate splitting. As shown, the grooves 120, 122 are axially offset from one another, so as to allow the cutting edge to extend all the way to the tip 118.

Moving now to Figure 12. The engagement portion 124 of fastener 110 is generally similar to that of fastener 10, and includes a thread 125 that provides a saw-tooth shaped profile 142 when viewed in side-section. Trials by the applicant have demonstrated that a fine gauge thread provides improved hold within the plasterboard, promoting a strong and robust connection to the underlying substrate. For example, it is contemplated that fastener 110 may be provided in 6G, 7G or 8G nominations, however such sizing is understood to be non-limiting.

It is contemplated that at least a portion of the shank 114 may be coated in an anti-corrosive coating. For example, the coating may be a trivalent chromium (CR3) coating. Trials by the applicant have demonstrated such coating to provide several advantages over other coatings more conventionally used in the building and construction industry (such as CR6), primarily due to its reduced toxicity and environmental impact. It is understood that use of such coating may therefore allow fastener 110 to comply with industry regulations and/or reduce waste management costs to end users and manufacturers of the fastener 110.

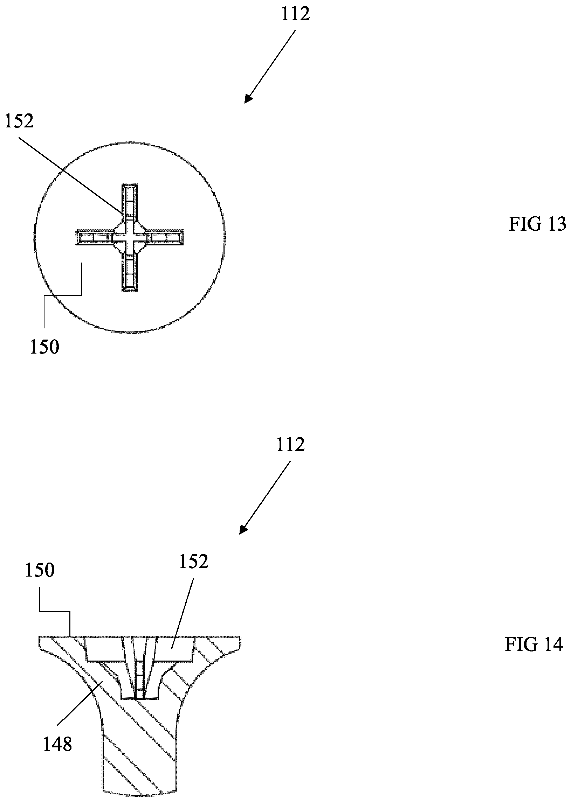

Turning now to Figures 13 and 14. As shown, the head 112 includes a substantially flat disc shaped upper surface 150 that is arranged to be sat substantially flush within the plasterboard. A cross-slot (i.e. Phillips) shaped cavity provides a drive portion 152 that extends into the upper surface 150. It is understood that the drive portion 152 may be provided in other forms and is not limited to cross-slot shaped cavities. Trials by the applicant have demonstrated that the sharp bugle profile of the head 112 assists the head 112 to countersink into the plasterboard without crushing the core or tearing the skin or paper layer when compared to other head profiles.

Summarily, it is understood that the fastener as described herein provides an alternative to existing self-drilling fasteners fasteners and may result in improved levels of useability that are advantageous for the DIY market. For example, the provision of twin cutting faces provided along the distal portion proximate the tip may lower drive torque requirements, which may assist in reduce fatigue and/or allow said fasteners to be installed using lower-powered power tools. In addition, the provision of a hex-shaped receiving within the fastener head provides an efficient, familiar means of transferring torque between a driving tool and the fastener, reducing the possibility of slippage. Further, the use of a zinc-nickel based coating provides the fastener with improved performance characteristics, resulting in a high performance fastener that is particularly applicable to applications where durability and corrosion resistance are critical.

The reference in this specification to any prior publication (or information derived from it), or to any matter which is known, is not, and should not be taken as an acknowledgment or admission or any form of suggestion that that prior publication (or information derived from it) or known matter forms part of the common general knowledge in the field of endeavour to which this specification relates.

Throughout this specification and the claims which follow, unless the context requires otherwise, the word 'comprise', and variations such as 'comprises' and 'comprising', will be understood to imply the inclusion of a stated integer or step or group of integers or steps but not the exclusion of any other integer or step or group of integers or steps.

### LEGEND

| | |
|---|---|
| **10** | Fastener |
| 12 | Head |
| 14 | Shank |
| 16 | Distal portion |
| 18 | Tip |
| 20 | Groove |
| 22 | Groove |
| 24 | Engagement portion |
| 25 | Thread |
| 26 | Debris clearing portion. |
| 28 | Intermediate portion |
| 30 | Projections |
| 32 | Self-countersinking face |
| 34 | Thread |
| 35 | Notches |
| 36 | Spur |
| 38 | Side walls |
| 40 | Ramp surfaces |
| 42 | Teeth |
| 44 | Burr |
| 46 | Channel |
| 48 | Head body |
| 50 | Upper surface |
| 52 | Drive portion |
| 54 | Tapered region |

Certain embodiments of the invention are described in the following clauses:
Clause 1. A fastener comprising a head and a shank that terminates in a self-drilling tip, the shank including a distal portion that is spaced away from the head and includes the tip, wherein the distal portion is provided with a pair of parallel grooves that define respective cutting faces of the fastener.
Clause 2. The fastener of clause 1, wherein each groove is defined by a pair of radially offset faces, when viewed along a longitudinal axis of the fastener.
Clause 3. The fastener of clause 1, wherein the respective faces of each groove are radially offset from one another by up to about 90°.
Clause 4. The fastener of clause 2 or clause 3, wherein each groove includes at least one substantially planar face.
Clause 5. The fastener of any one of clauses 2 to 4, wherein each groove includes at least one ramped face.
Clause 6. The fastener of any one of the preceding clauses, wherein each groove has a scalloped profile when viewed axially along a length of the fastener.
Clause 7. The fastener of any one of the preceding clauses, wherein the pair of grooves are neighbouring grooves in the sense that, together, both grooves are confined within a sector of about 180° or less in a direction of rotation of the fastener.
Clause 8. The fastener of any one of the preceding clauses, wherein the grooves are interspaced by an axially extending spur.
Clause 9. The fastener of clause 8, wherein the spur includes a pair of substantially parallel side faces.
Clause 10. The fastener of clause 9, wherein each groove is partly defined by a respective side face of the spur.
Clause 11. The fastener of any one of the preceding clauses, wherein the tip is a pointed tip.
Clause 12. The fastener of any one of the preceding clauses, wherein the shank further includes an engagement portion.
Clause 13. The fastener of clause 12, wherein the engagement portion includes a thread that, when viewed axially along a length of the fastener, has a saw-tooth profile.
Clause 14. The fastener of any one of the preceding clauses, wherein the shank further includes a debris clearing portion.
Clause 15. The fastener of clause 14, wherein the debris clearing portion includes a plurality of helical burrs that define flutes for channelling debris.
Clause 16. The fastener of any one of the preceding clauses, wherein the head of the fastener is a bugle shaped head.
Clause 17. The fastener of any one of the preceding clauses wherein the head includes a hexagonal shaped or cross-shaped drive portion.
Clause 18. The fastener of any one of the preceding clauses, wherein the head includes a plurality of projections extending from an underside thereof towards the shank.
Clause 19. The fastener of clause 18, wherein each projection includes a substantially planar cutting face.
Clause 20. The fastener of any one of the preceding clauses, wherein the fastener includes a zinc-nickel coating, or a chromium coating.

## Claims

1. A fastener comprising a head and a shank that terminates in a self-drilling tip, the shank including a distal portion that is spaced away from the head and includes the tip, wherein the distal portion is provided with a pair of parallel grooves that define respective cutting faces of the fastener.

2. The fastener of claim 1, wherein each groove is defined by a pair of radially offset faces, when viewed along a longitudinal axis of the fastener or wherein the respective faces of each groove are radially offset from one another by up to about 90°.

3. The fastener of claim 2, wherein each groove includes at least one substantially planar face.

4. The fastener of any one of claims 2 to 3, wherein each groove includes at least one ramped face.

5. The fastener of any one of the preceding claims, wherein each groove has a scalloped profile when viewed axially along a length of the fastener, or wherein the pair of grooves are neighbouring grooves in the sense that, together, both grooves are confined within a sector of about 180° or less in a direction of rotation of the fastener.

6. The fastener of any one of the preceding claims, wherein the grooves are interspaced by an axially extending spur, and optionally wherein the spur includes a pair of substantially parallel side faces.

7. The fastener of claim 6, wherein each groove is partly defined by a respective side face of the spur.

8. The fastener of any one of the preceding claims, wherein the tip is a pointed tip.

9. The fastener of any one of the preceding claims, wherein the shank further includes an engagement portion and optionally, wherein the engagement portion includes a thread that, when viewed axially along a length of the fastener, has a saw-tooth profile.

10. The fastener of any one of the preceding claims, wherein the shank further includes a debris clearing portion, and optionally, wherein the debris clearing portion includes a plurality of helical burrs that define flutes for channelling debris.

11. The fastener of any one of the preceding claims, wherein the head of the fastener is a bugle shaped head.

12. The fastener of any one of the preceding claims, wherein the head includes a hexagonal shaped or cross-shaped drive portion.

13. The fastener of any one of the preceding claims, wherein the head includes a plurality of projections extending from an underside thereof towards the shank.

14. The fastener of claim 13, wherein each projection includes a substantially planar cutting face.

15. The fastener of any one of the preceding claims, wherein the fastener includes a zinc-nickel coating, or a chromium coating.
